# EUROPÄISCHE PATENTSCHRIFT

(11) **EP 1 447 273 B1**
(45) Veröffentlichungstag und Bekanntmachung des Hinweises auf die Patenterteilung: **07.11.2007**
(21) Anmeldenummer: 04003267.4
(22) Anmeldetag: 13.02.2004
(51) Int. Cl.: B60R 3/02, B61D 23/02, A61G 3/02

(54) **Schiebestufenvorrichtung**
Extending step
Marchepied extensible

(30) Priorität: 14.02.2003 DE 10306528
(43) Veröffentlichungstag der Anmeldung: 18.08.2004
(73) Patentinhaber: IBEG systems GmbH, 45770 Marl (DE)
(72) Erfinder: Pietrowski, Peter, 45770 Marl (DE)
(74) Vertreter: Kreutzer, Ulrich

(56) Entgegenhaltungen:
- WO-A-02/43986
- DE-A1- 19 928 571
- PATENT ABSTRACTS OF JAPAN Bd. 018, Nr. 319 (M-1623), 17. Juni 1994 (1994-06-17) & JP 06 072231 A (TOKYO ISUZU JIDOSHA KK), 15. März 1994 (1994-03-15)

## Beschreibung

Die Erfindung betrifft eine Schiebestufenvorrichtung für Land-, Luft- und Wasserfahrzeuge, insbesondere für Schienenfahrzeuge des öffentlichen Personennah- und -fernverkehrs.

Solche Schiebestufenvorrichtungen sind bekannt. Sie umfassen eine im allgemeinen als Ausfahreinheit bezeichnete Anordnung, die aus dem Fahrzeugboden zur Bildung eines Übergangs z.B. an eine Bahnsteigkante herangefahren werden kann. Dabei kann der Bahnsteig unterhalb, oberhalb oder auf gleicher Höhe wie der Fahrzeugfußboden liegen.

Im Bereich der Schienenfahrzeuge für den Personenverkehr wird regelmäßig gefordert, daß der so gebildete Übergang so stabil ist, daß der Übergang im Ganzen eine Flächenlast von etwa 400 kg tragen kann. Die DE 199 28 571 A1 zeigt eine einen solchen Übergang bildende Schiebestufenvorrichtung gemäß dem Oberbegriff von Anspruch 1.

Die bekannten Schiebestufenvorrichtungen, die bei Schienenfahrzeugen entweder unter den äußeren Fahrzeuglängsträger oder in den Fahrzeuglängsträger eingebaut werden, erfordern stets große Eingriffe in die Fahrzeugkonstruktion, da aus Stabilitätsgründen die bekannten Schiebestufenvorrichtungen eine erhebliche Bauhöhe aufweisen.

Davon ausgehend liegt der Erfindung die Aufgabe zugrunde, eine Schiebestufenvorrichtung anzugeben, die trotz großer Stabilität eine geringe Bauhöhe aufweist und insbesondere auch bei bestehenden Fahrzeugkonstruktionen leicht nachgerüstet werden kann.

Die Aufgabe wird gelöst von einer Schiebestufenvorrichtung gemäß Anspruch 1. Vorteilhafte Ausgestaltungen und Weiterbildungen sind Gegenstand der Unteransprüche.

Weitere Einzelheiten und Vorteile der Erfindung ergeben sich aus der nachfolgenden detaillierten Beschreibung in Verbindung mit der Zeichnung, in welcher zwei Ausführungsbeispiele rein beispielhaft und nicht beschränkend gezeigt sind. Es zeigen:
- Fig. 1: Eine schematische Draufsicht auf die westlichen Teile einer ersten Schiebestufenanordnung, wobei jedes Segment der Ausfahreinheit im ausgefahrenen Zustand von zwei Schwenkhebeln gestützt wird,
- Fig. 2: eine schematische Seitenansicht der Schiebestufenvorrichtung gemäß Fig. 1,
- Fig. 3: eine schematische Draufsicht auf die wesentlichen Teile einer zweiten Schiebestufenvorrichtung, wobei jedes Segment der Ausfahreinheit im ausgefahrenen Zustand von zwei Hubhebeln gestützt wird, und
- Fig. 4: eine schematische Seitenansicht der Schiebestufenvorrichtung gemäß Fig.3.

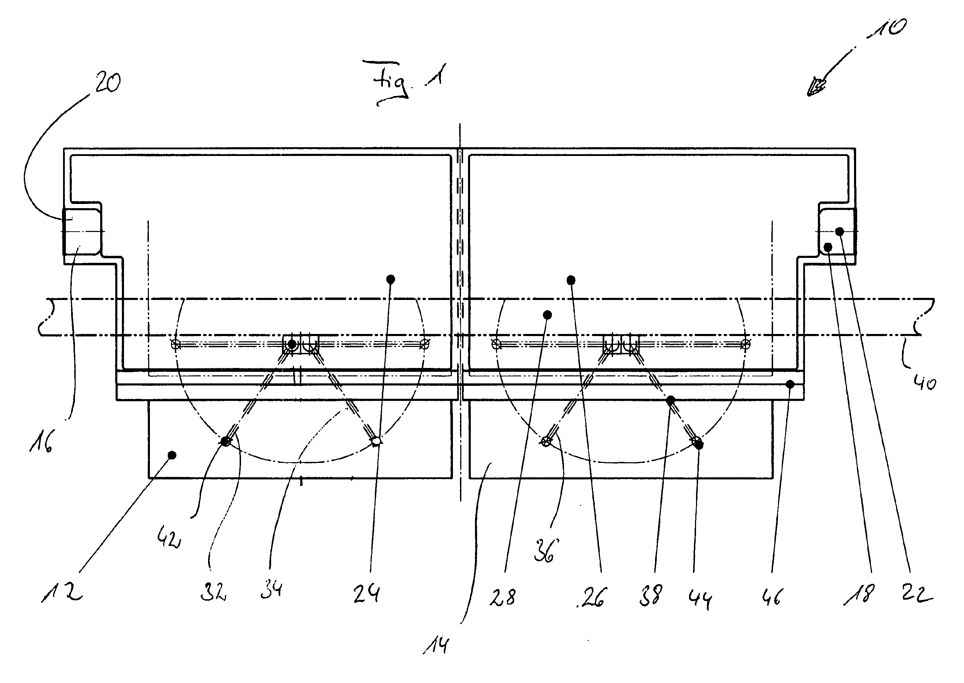

Da sich die beiden in den Fig. 1 bis 4 gezeigten Ausführungsbeispiele nur hinsichtlich der verwendeten Stützanordnung unterscheiden, sonst aber viele identische bzw. gleichwirkende Teile aufweisen, werden - sofern nicht ausdrücklich anders gesagt - im nachfolgenden beide Ausführungsbeispiele parallel behandelt. Auch wurden in den Zeichnungen gleichwirkende Teile mit jeweils denselben Bezugszeichen versehen.

Die in den Fig. 1 bis 4 in ihrer Gesamtheit mit 10 bezeichnete Schiebestufenvorrichtung zeichnet sich durch eine äußerst geringe Bauhöhe aus, die vorteilhaft nur geringe Eingriffe in die Fahrzeugkonstruktion bedingt und vorteilhaft auch leicht nachrüstbar ist. Die geringe Bauhöhe wird vor allem dadurch erreicht, daß die Ausfahreinheit zwei separate Segmente 12 und 14 umfaßt, die bei Land- und Luftfahrzeugen im Bereich der Türen angeordnet werden und aus Sicherheitsgründen die gesamte Breite des Einstiegsbereich umfassen sollen.
Diese letztgenannte Folgerung bedingt bei einteiligen Ausfahreinheiten aufgrund der geforderten Stabilität eine wesentlich größere Bauhöhe.

Ferner zeichnet sich die erfindungsgemäße Schiebestufenvorrichtung durch eine in der Verfahrrichtung der Segmente gesehen seitliche Anordnung des oder der Antriebs/Antriebe der Segmente aus, die vorteilhaft dazu führt, daß der oder die Antrieb/e nicht mehr aufwendig in den Fahrzeugboden integriert werden müssen.

Bei einer bevorzugten Ausführungsform ist zudem eine separate Stützanordnung vorgesehen, die Mittel zum Stützen der Segmente im ausgefahrenen Zustand aufweist.

Bei den beiden gezeigten Ausführungsbeispielen weist jede Ausfahreinheit zwei Segmente 12 und 14 auf, die aufgrund der geringen Bauhöhe leicht von oben in einen entsprechenden Ausschnitt des Fahrzeugbodens eingesetzt und dort z.B. mittels Schrauben befestigt werden können. Dies erlaubt eine einfache und schnelle Montage, die zudem sehr wartungsfreundlich ist. Sollte es nötig werden, kann ein Segment in wenigen Minuten ausgetauscht werden, wobei die Unterteilung der Ausfahreinheit in wenigstens zwei Segmente zudem bedingt, daß jedes Segment relativ leicht ist, so daß z.B. bei typischen Baugrößen für Straßenbahnen keine speziellen Hebewerkzeuge zum Austausch eines Segmentes benötigt werden. Eine Straßenbahn kann daher auch "vor Ort" repariert werden, ohne daß sie eine Werkstatt anfahren muß.

Jedes Segment wird unabhängig von dem anderen vorzugsweise elektromotorisch angetrieben, wozu jedem Segment ein Antrieb 16 bzw. 18 zugeordnet ist. Im Falle eines Stromausfalls oder sonstiger Antriebsprobleme kann jedes Segment auch über eine hier nur angedeutete, an sich bekannte mechanische Notbetätigung 20 bzw. 22 verfahren werden.

Jedem Segment 12 bzw. 14 ist ein eigener Deckel 24 bzw. 26 zugeordnet, der bei den gezeigten Ausführungsbeispielen gleichzeitig Teil des Fahrzeugbodens bildet. Durch die Trennung der Ausfahreinheit in zwei Segmente, muß jeder Deckel 24 bzw. 26 nur die Hälfte des Einstiegsbereiches des jeweiligen Fahrzeugs überspannen und kann daher dünner ausgelegt werden, was vorteilhaft zur geringen Bauhöhe der erfindungsgemäßen Schiebestufenvorrichtung beiträgt.

Die Antriebe 16 und 18 sind - wie auch die Notbetätigungen 20 und 22 - in der Verfahrrichtung der Segmente gesehen seitlich neben den Segmenten angeordnet. Die Position und Lage der Antriebe ist dabei vorteilhaft flexibel. Die Antriebe und die Notbetätigungen können auf hier nicht weiter gezeigte Kettentriebe wirken, die über Umlenkungen an unterschiedliche Positionen geführt werden können.

Jedes Segment ist in Aus- und Einfahrrichtung gedämpft, insbesondere über einen oder mehrere hier nur angedeutete Federtöpfe 28. Diese Federtöpfe wirken, wenn die ausfahrenden Segmente auf ein festes Hindernis wie z.B. eine Bahnsteigkante stoßen. Der dann entsehende Federweg kann genutzt werden, um einen ebenfalls nur angedeuteten Sensor 30 auszulösen, der dann an den Antrieb bzw. eine hier nicht weiter gezeigte Steuereinheit entsprechendes Signal sendet, um die Verfahrbewegung des jeweiligen Segmentes zu stoppen oder umzukehren. Dabei sei an dieser Stelle darauf hingewiesen, daß bei Schienenfahrzeugen der Bahnsteig oberhalb oder auf gleicher Höhe wie der Fahrzeugfußboden des Schienenfahrzeugs liegen kann. Ist der Abstand zwischen Bahnsteigkante und Fahrzeugfußbodenkante geringer als die maximale Ausfahrlänge der Segmente, so fahren die Segmente vor die Bahnsteigkante, was durch den genannten Sensor erkannt wird.

Um die je nach Anwendungsfall der erfindungsgemäßen Schiebestufenvorrichtung erforderliche Gesamttragkraft des durch die Segmente gebildeten Übergangs, gemessen in einer Flächenlast (z.B. 400 kg) zu gewährleisten, ohne die Bauhöhe der einzelnen Segmente zu erhöhen, ist bei den gezeigten Ausführungsbeispielen eine von der eigentlichen Ausfahreinheit separierte Stützanordnung vorgesehen, die problemlos unterhalb des Fahrzeugbodens angeordnet werden kann, ohne daß bedeutende Eingriffe in die Fahrzeugkonstruktion vorgenommen werden müssen. Insbesondere lassen sich die beiden gezeigten Stützanordnungen auch bei bestehenden Fahrzeugen problemlos nachrüsten.

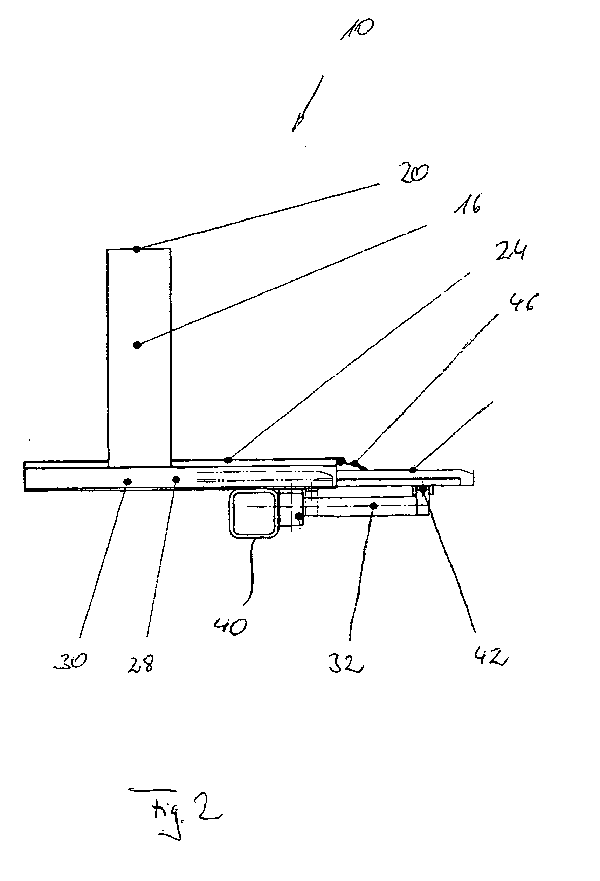

Die in den Fig. 1 und 2 gezeigte Stützanordnung umfaßt im Ganzen vier Schwenkhebel 32, 34, 36 und 38, von denen jeweils zwei einem Segment 12 bzw. 14 zugeordnet sind. Die Schwenkhebel sind über entsprechende Gelenke mit der Fahrzeugunterkonstruktion, im gezeigten Ausführungsbeispiel mit einem Fahrzeuglängsträger 40 verbunden. Fahren die Segmente aus, schwenken auch die Hebel aus und bilden somit eine statische Unterstützung in jeder Position.

Bei dem in den Fig. 1 und 2 gezeigten Ausführungsbeispiel ist jedem Segment 12 und 14 ein Trittsensor 42 bzw. 44 zugeordnet, der erkennt, ob das jeweilige Segment belastet ist, ob sich also z.B. eine Person auf dem ausgefahrenen Segment befindet. In solchen Fällen sendet der jeweilige Sensor ein Signal an eine hier nicht weiter gezeigte Steuereinheit und verhindert so, daß das Segment zurückgezogen wird. Solche Sensoren können leicht in Form von Kontaktschaltern ausgebildet und z.B. im Übergangsbereich zwischen einem oder mehreren Schwenkhebeln und dem jeweiligen Segment angeordnet werden.

Eine durchgehende oder zwei separate Schutzklappen 46 decken die Segmente 12 und 14 im eingefahrenen Zustand ab und verhindern, daß Schmutz oder Wasser bei der Fahrt auf die Segmente gelangen kann.

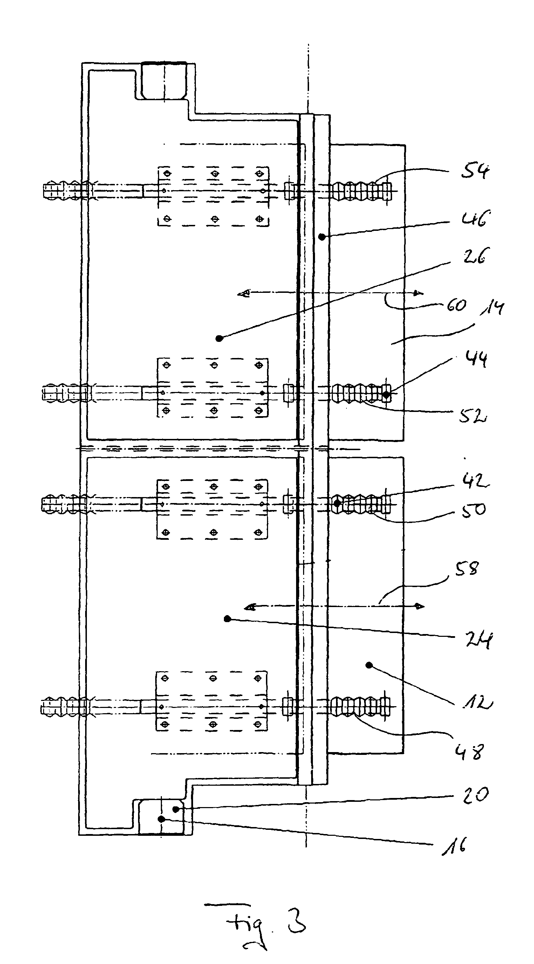

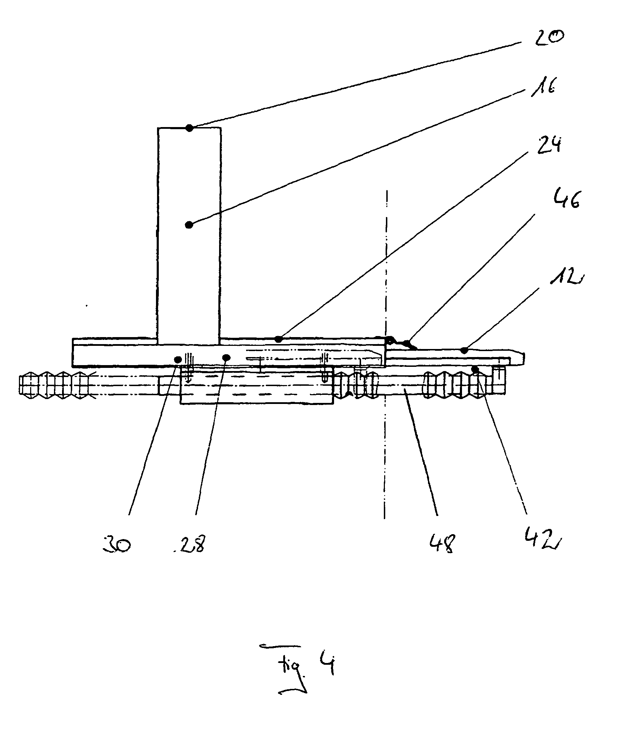

Bei dem in den Fig. 3 und 4 gezeigten Ausführungsbeispiel umfaßt die Stützanordnung vier Hubhebel 48, 50, 52 und 54, von denen jeweils zwei ein Segment stützen und über stabile Führungen mit der Fahrzeugunterkonstruktion verbunden sind. Fährt ein Segment aus, bewegen sich auch die beiden Hubhebel mit und bilden in jeder Position eine statische Unterstützung des Segmentes. Auch bei diesem Ausführungsbeispiel sind Sensoren 42 und 44 angeordnet, die eine Belastung des jeweiligen Segmentes z.B. durch eine darauf befindliche Person feststellen können. Auch hierbei werden die einzelnen Segmente durch eine oder mehrere Schutzklappen 46 im eingefahrenen Zustand geschützt. In der Fig. 3 ist zudem die Verfahrrichtung der Segmente durch die Bewegungspfeile 58 und 60 angedeutet.

Im Rahmen des Erfindungsgedankens sind zahlreiche Abwandlungen und Weiterbildungen möglich, die sich z.B. auf die Anordnung und Ausgestaltung des oder der Antriebe und der Stützanordnung beziehen. Auch können mehr als zwei Segmente zur Bildung des gewünschten Übergangs vorgesehen werden. Erfindungswesentlich ist jedenfalls die Separierung der Ausfahreinheit in mehrere Segmente, die für sich genommen leichter und dünner ausgestaltet werden können, als ein einzelnes Segment vergleichbarer Tragkraft, so daß sich im Ganzen eine geringe Einbauhöhe der Schiebestufenvorrichtung ergibt, die in vielen Anwenddungsfällen dazu führt, daß keine oder nur geringfügige Eingriffe in die Fahrzeugkonstruktion vorgenommen werden müssen und es in vielen Fällen sogar ausreicht, lediglich die Bodenplatte entsprechend auszunehmen.

## Patentansprüche

1. Schiebestufenvorrichtung (10) für Land-, Luft- und Wasserfahrzeuge, insbesondere für Schienenfahrzeuge, umfassend
- eine Ausfahreinheit zur Bildung eines Übergangs, wobei die Ausfahreinheit in einer Verfahrrichtung verfahrbar ist, und
- einen Antrieb (16) zum Verfahren der Ausfahreinheit in der Verfahrrichtung,
**dadurch gekennzeichnet,**
- **daß** die Ausfahreinheit wenigstens zwei im bestimmungsgemäßen Montagezustand in Verfahrrichtung nebeneinander angeordnete separate Segmente (12, 14) aufweist, die im ausgefahrenen Zustand den Übergang bilden,
- **daß** die wenigstens eine Antriebseinheit (16) im bestimmungsgemäßen Montagezustand in Verfahrrichtung seitlich neben den verfahrbaren separaten Segmenten (12, 14) angeordnet ist.

2. Schiebestufenvorrichtung nach Anspruch 1,
**dadurch gekennzeichnet,**
**daß** jedes Segment über einen eigenen, vorzugsweise elektromotorischen Antrieb (16) verfügt.

3. Schiebestufenvorrichtung nach Anspruch 1 oder 2,
**dadurch gekennzeichnet**
**daß** eine Notbetätigung (22) zum Verfahren der Segmente bei Ausfall des bzw. der Antriebs/Antriebe vorgesehen ist.

4. Schiebestufenvorrichtung nach einem der Ansprüche 1 bis 3,
**dadurch gekennzeichnet,**
**daß** jedem Segment ein Deckel (24, 26) zugeordnet ist, der im bestimmungsgemäßen Montagezustand Teil des Fußbodens des Fahrzeugs bildet.

5. Schiebestufenvorrichtung nach einem der Ansprüche 1 bis 4,
**dadurch gekennzeichnet,**
**daß** eine von der Ausfahreinheit separierte Stützanordnung vorgesehen ist, welche Mittel zum Stützen der Segmente der Ausfahreinheit im ausgefahrenen Zustand umfaßt.

6. Schiebestufenvorrichtung nach Anspruch 5,
**dadurch gekennzeichnet,**
**daß** die Mittel zum Stützen der Segmente wenigstens einen Schwenkhebel (32, 34, 36, 38) pro Segment umfassen.

7. Schiebestufenvorrichtung nach Anspruch 5,
**dadurch gekennzeichnet,**
**daß** die Mittel zum Stützen der Segmente wenigstens einen Hubhebel (48, 50, 52, 54) pro Segment umfassen.

8. Schiebestufenvorrichtung einem der Ansprüche 1 bis 7,
**dadurch gekennzeichnet,**
**daß** jedes Segment der Ausfahreinheit in der Verfahrrichtung gedämpft ist.

9. Schiebestufenvorrichtung nach einem der Ansprüche 1 bis 8,
**dadurch gekennzeichnet,**
**daß** jedem Segment der Ausfahreinheit wenigstens ein Sensor (30) zum Stoppen der Verfahrbewegung des jeweiligen Segments beim Treffen auf ein Hindernis zugeordnet ist.

10. Schiebestufenvorrichtung nach einem der Ansprüche 1 bis 9,
**dadurch gekennzeichnet**
**daß** jedem Segment ein Sensor (30) zum Feststellen einer Trittbelastung des jeweiligen Segments zugeordnet ist.

## Claims

1. A sliding step device (10) for use on ground vehicles, aircraft, and watercraft, specifically on rail vehicles, comprising
- an extractable unit to form a crossing point wherein the extractable unit is shiftable in a traversing direction, and
- a drive (16) for shifting the extractable unit in the traversing direction,
**characterized in that**
- the extractable unit has at least two separate segments (12, 14) juxtaposed in the traversing direction when in a duly assembled condition, which when extracted define the crossing point,
- the at least one driving unit (16), when in a duly assembled condition, is laterally disposed in the traversing direction next to the shiftable separate segments (12, 14).

2. The sliding step device according to claim 1,
**characterized in that**
each segment has a drive (16) of its own which preferably is by an electric motor.

3. The sliding step device according to claim 1 or 2,
**characterized in that**
an emergency actuator (22) is provided to shift the segments in case of failure of the drive/drives.

4. The sliding step device according to any one of claims 1 to 3,
**characterized in that**
each segment has associated therewith a lid (24, 26) which, when in a duly assembled condition, defines some part of the vehicle bottom.

5. The sliding step device according to any one of claims 1 to 4,
**characterized in that**
a supporting assembly separated from the extractable unit is provided which comprises means for supporting the segments when in an extracted condition.

6. The sliding step device according to claim 5,
**characterized in that**
the means for supporting the segments comprise at least one pivoted lever (32, 34, 36, 38) per segment.

7. The sliding step device according to claim 5,
**characterized in that**
the means for supporting the segments comprise at least one lifting lever (48, 50, 52, 54) per segment.

8. The sliding step device according to any one of claims 1 to 7,
**characterized in that**
each segment of the extractable unit is attenuated in the traversing direction.

9. The sliding step device according to any one of claims 1 to 8,
**characterized in that**
each segment has associated therewith at least one sensor (30) for stopping the traversing motion of the respective segment when it hits against an obstacle.

10. The sliding step device according to any one of claims 1 to 9,
**characterized in that**
each segment has associated therewith a sensor (30) for determining a load applied by stepping on the respective segment.

## Revendications

1. Marchepied extensible (10) pour des véhicules terrestres, aéronefs et bateaux ou navires, en particulier pour des véhicules sur rails, comprenant
- une unité extensible destinée à former un passage, ladite unité extensible étant déplaçable dans une direction de déplacement, et
- un mécanisme d'entraînement (16) destiné à déplacer l'unité extensible dans la direction de déplacement,
**caractérisé par le fait**
- **que** ladite unité extensible présente au moins deux segments séparés (12, 14) qui, à l'état de montage conforme, sont disposés l'un à côté de l'autre dans la direction de déplacement et qui, à l'état sorti, forment ledit passage,
- **que**, à l'état de montage conforme, ladite au moins une unité d'entraînement (16) est disposée latéralement à côté des segments séparés déplaçables (12, 14), dans la direction de déplacement.

2. Marchepied extensible selon la revendication 1,
**caractérisé par le fait**
**que** chacun des segments dispose d'un propre mécanisme d'entraînement (16), de préférence électromoteur.

3. Marchepied extensible selon la revendication 1 ou 2,
**caractérisé par le fait**
**que** l'on prévoit un dispositif de manoeuvre de secours (22) destiné à déplacer lesdits segments en cas de défaillance du ou bien des mécanisme(s) d'entraînement.

4. Marchepied extensible selon l'une des revendications 1 à 3,
**caractérisé par le fait**
**qu'**à chacun des segments est associé un couvercle (24, 26) qui, à l'état de montage conforme, forme une partie du plancher du véhicule.

5. Marchepied extensible selon l'une des revendications 1 à 4,
**caractérisé par le fait**
**que** l'on prévoit une disposition d'appui qui est séparée de ladite unité extensible et qui comprend des moyens destinés à appuyer les segments de l'unité extensible à l'état sorti.

6. Marchepied extensible selon la revendication 5,
**caractérisé par le fait**
**que** lesdits moyens d'appui des segments comprennent au moins un levier pivotant (32, 34, 36, 38) par segment.

7. Marchepied extensible selon la revendication 5,
**caractérisé par le fait**
**que** lesdits moyens d'appui des segments comprennent au moins un levier de levage (48, 50, 52, 54) par segment.

8. Marchepied extensible selon l'une des revendications 1 à 7,
**caractérisé par le fait**
**que** chacun des segments de l'unité extensible est amorti dans la direction de déplacement.

9. Marchepied extensible selon l'une des revendications 1 à 8,
**caractérisé par le fait**
**qu'**à chacun des segments de l'unité extensible est associé au moins un capteur (30) destiné à arrêter le mouvement de déplacement du segment respectif lorsque celui-ci heurte un obstacle.

10. Marchepied extensible selon l'une des revendications 1 à 9,
**caractérisé par le fait**
**qu'**à chacun des segments est associé un capteur (30) destiné à détecter une charge due aux pas à laquelle le segment respectif est soumis.
